(19) Europäisches Patentamt
European Patent Office
Office européen des brevets

(11) **EP 4 546 441 A2**

(12) **EUROPEAN PATENT APPLICATION**

(43) Date of publication:
**30.04.2025 Bulletin 2025/18**

(21) Application number: **24209238.5**

(22) Date of filing: **28.10.2024**

(51) International Patent Classification (IPC):
**H01M 4/131** (2010.01)   **H01M 4/66** (2006.01)
**H01M 10/052** (2010.01)

(52) Cooperative Patent Classification (CPC):
**H01M 4/667; H01M 4/131; H01M 4/661;
H01M 10/052**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.10.2023 KR 20230145276**

(71) Applicant: **SAMSUNG SDI CO., LTD.
Yongin-si, Gyeonggi-do 17084 (KR)**

(72) Inventors:
• **Park, Jongseok**
  **17084 Yongin-si, Gyeonggi-do (KR)**
• **Park, Jinhwan**
  **17084 Yongin-si, Gyeonggi-do (KR)**
• **Moon, Jongseok**
  **17084 Yongin-si, Gyeonggi-do (KR)**
• **Bae, Woojin**
  **17084 Yongin-si, Gyeonggi-do (KR)**
• **Lee, Kanghee**
  **17084 Yongin-si, Gyeonggi-do (KR)**
• **Kim, Heemin**
  **17084 Yongin-si, Gyeonggi-do (KR)**
• **Woo, Hyunsik**
  **17084 Yongin-si, Gyeonggi-do (KR)**
• **Shin, Juhun**
  **17084 Yongin-si, Gyeonggi-do (KR)**
• **Pyo, Sujin**
  **17084 Yongin-si, Gyeonggi-do (KR)**
• **Hong, Donggi**
  **17084 Yongin-si, Gyeonggi-do (KR)**

(74) Representative: **Michalski Hüttermann & Partner
Patentanwälte mbB
Kaistraße 16A
40221 Düsseldorf (DE)**

(54) **ELECTRODE CURRENT COLLECTOR, METHOD OF MANUFACTURING THE SAME, AND LITHIUM BATTERY INCLUDING THE SAME**

(57)   Provided herein are an electrode current collector, a method of manufacturing the same, and a lithium battery including the same. The electrode current collector includes a metal substrate and a metal oxide layer on at least one surface of the metal substrate, wherein the metal substrate includes titanium (Ti), and the metal oxide layer includes crystalline titanium oxide ($TiO_2$).

FIG. 1

**Description**

**CROSS-REFERENCE TO RELATED APPLICATION**

The present application claims priority and the benefit of Korean Patent Application No. 10-2023-0145276, filed on October 27, 2023, in the Korean Intellectual Property Office, the entire content of which is incorporated by reference herein.

**BACKGROUND**

**1. Field**

One or more embodiments of the present disclosure relate to an electrode current collector including a metal, a method of manufacturing the same, and a lithium battery including the same.

**2. Description of the Related Art**

Lithium secondary batteries are high-performance secondary batteries having the highest energy density among commercially available secondary batteries and can be used in various fields, such as electric vehicles.

As an anode current collector for a lithium battery, copper metal is used. If such copper metal is used as an anode current collector, dendrites may be formed on the surface of the anode current collector due to copper oxide formed on the surface of the copper metal, thereby resulting in reduced lifespan and stability of a lithium battery, and thus, improvement in this regard is desired.

**SUMMARY**

One or more embodiments of the present disclosure include an electrode current collector including a metal and a metal oxide.

One or more embodiments include a method of manufacturing the above-described electrode current collector.

One or more embodiments include a lithium battery including the above-described electrode current collector.

Additional aspects of embodiments will be set forth in part in the description which follows and, in part, will be apparent from the present description, or may be learned by practice of the presented embodiments of the present disclosure.

According to one or more embodiments, an electrode current collector includes a metal substrate and

a metal oxide layer on at least one surface of the metal substrate,
wherein the metal substrate includes titanium (Ti), and
the metal oxide layer includes crystalline titanium oxide ($TiO_2$).

According to one or more embodiments, a method of manufacturing an electrode current collector includes preparing a metal substrate, and

heat-treating the metal substrate to provide a metal oxide layer on at least one surface of the metal substrate,
wherein the metal substrate includes titanium (Ti), and
the metal oxide layer includes crystalline titanium oxide ($TiO_2$).

According to one or more embodiments, a lithium battery includes the above-described electrode current collector.

**BRIEF DESCRIPTION OF THE DRAWINGS**

The above and other aspects and features of certain embodiments of the present disclosure will be more apparent from the following description taken in conjunction with the accompanying drawings, in which:

FIG. 1 is a schematic cross-sectional view of an electrode current collector according to embodiments;
FIG. 2 is a schematic cross-sectional view of a lithium battery according to embodiments;
FIG. 3 is a schematic cross-sectional view of a lithium battery according to embodiments;
FIG. 4 is a schematic view of a lithium battery according to embodiments;

FIG. 5 is a schematic view of a lithium battery according to embodiments; and

FIG. 6 is a schematic view of a lithium battery according to embodiments.

## DETAILED DESCRIPTION

Reference will now be made in more detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of embodiments of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, an electrode current collector 100 according to one or more embodiments including: a metal substrate 110; and a metal oxide layer 120 on at least one surface of the metal substrate 110, in which the metal substrate 110 includes titanium (Ti), and the metal oxide layer 120 includes crystalline titanium oxide ($TiO_2$), a method of manufacturing the same, and a lithium battery 10 including the same will be described in more detail. These embodiments are presented as examples to explain the subject matter of the present disclosure in more detail, and it will be apparent to those of ordinary skill in the art that the scope of the present disclosure is not limited by these embodiments.

Unless otherwise defined, all technical and scientific terms used herein have the same meaning as commonly understood by those of ordinary skill in the art to which the present disclosure pertains. In case of conflict with the commonly understood meaning, the present specification, including the definitions in the present disclosure, will take precedence.

While suitable methods and materials are described herein as examples, other methods and materials that are similar or equivalent to those described herein, can be used in the practice or testing of the present disclosure,. Singular expressions include plural expressions unless the context clearly indicates otherwise.

It will be understood that the term "comprise," "have," or the like specifies the presence of stated features, numbers, steps, operations, elements, parts, components, materials, or combinations thereof described herein, but does not preclude the presence or addition of one or more other features, numbers, steps, operations, elements, parts, components, materials, or combinations thereof.

The term "a combination thereof" used herein refers to a mixture or combination of at least one of the described elements.

The term "and/or" as used herein refers to including any and all combinations of at least one of the items described in relation thereto. The term "or" as used herein means "and/or." The expression "at least one" or "one or more" preceding elements in the present specification means that a list of all elements may be supplemented, and does not mean that individual elements of the description may be supplemented. For example, expressions such as "at least one of," when preceding a list of elements, modify the entire list of elements and do not modify the individual elements of the list.

In the drawings, various layers and areas may be illustrated as having enlarged or reduced thicknesses for clear illustration. Throughout the specification, like elements denote like reference numerals. Throughout the specification, when a portion of a layer, a film, a region, a plate, or the like is referred to as being "on" or "above" another portion, it includes not only a case in which the portion is directly on the other portion, but also a case in which another portion is present therebetween. Although the terms "first," "second," and the like may be used herein to describe various elements, elements should not be limited by these terms. These terms are only used to distinguish one element from another element.

"Metal" as used herein includes both metals and metalloids such as silicon and germanium, in elemental or ionic states.

The term "alloy" as used herein refers to a mixture of two or more metals.

The term "cathode active material" as used herein refers to a cathode material that can undergo lithiation and delithiation.

The term "anode active material" as used herein refers to an anode material that can undergo lithiation and delithiation.

The terms "lithiation" and "lithiate" as used herein refer to a process of adding lithium to a cathode active material or an anode active material.

The terms "delithiation" and "delithiate" as used herein refer to a process of removing lithium from a cathode active material or an anode active material.

The terms "charging" and "charge" as used herein refer to a process of providing electrochemical energy to a battery.

The terms "discharging" and "discharge" as used herein refer to a process of removing electrochemical energy from a battery.

The term "positive electrode" or "cathode" as used herein refers to an electrode where electrochemical reduction and lithiation occur during a discharging process.

The term "negative electrode" or "anode" as used herein refers to an electrode where electrochemical oxidation and delithiation occur during a discharging process.

Hereinafter, an electrode current collector according to one or more embodiments and a lithium battery including the same will be described in more detail with reference to the accompanying drawings.

### Electrode current collector

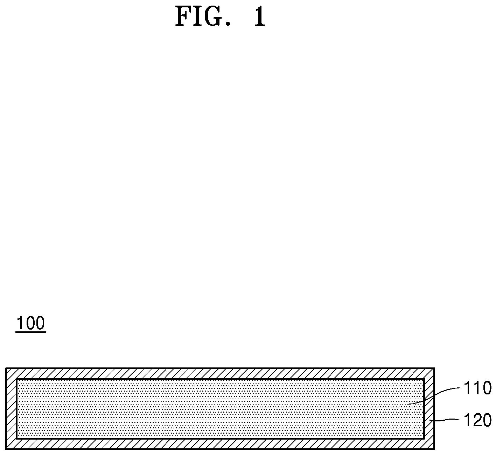

FIG. 1 is a schematic cross-sectional view of an electrode current collector 100 according to one or more embodiments.

Referring to FIG. 1, the electrode current collector 100 includes: a metal substrate 110; and a metal oxide layer 120 on at least one surface of the metal substrate 110, in which the metal substrate 110 may include titanium (Ti), and the metal oxide layer 120 may include crystalline titanium oxide ($TiO_2$). The crystalline titanium oxide ($TiO_2$) included in the metal oxide layer 120 has excellent electrical conductivity after undergoing intercalation of a trace amount of lithium at the beginning of charging a lithium battery, and thus, lithium metal may be uniformly (e.g., substantially uniformly) electrodeposited on the electrode current collector 100. For example, if the metal oxide layer 120 includes the crystalline titanium oxide ($TiO_2$), the crystalline titanium oxide has excellent electrical conductivity after undergoing intercalation of a trace amount of lithium ($Li_xTiO_2$) at the beginning of charging a lithium battery, and thus, lithium metal may also be electrodeposited on a surface of the crystalline titanium oxide. In some embodiments, if the metal oxide layer 120 includes the crystalline titanium oxide, lithium metal may be uniformly (e.g., substantially uniformly) electrodeposited on the entire surface of the electrode current collector 100, and thus, initial dendrite formation may be effectively suppressed or reduced.

In some embodiments, if the metal oxide layer 120 includes an oxide having low electrical conductivity instead of the crystalline titanium oxide, lithium metal may not be electrodeposited on a surface of the oxide having low electrical conductivity. For example, the surface of a copper (Cu) current collector used as a commercially available anode current collector mainly includes or consists of copper oxide (CuO) and/or copper hydroxide ($Cu(OH)_2$), which are electrical insulators, and, even after a lithium intercalation reaction, lithium oxide ($Li_2O$) and/or lithium hydroxide (LiOH), which are electrical insulators, is produced, and thus, the Cu current collector has impaired surface electrical conductivity. Thus, if lithium is electrodeposited on the surface of the Cu current collector, lithium electrodeposition is possible only in a localized area, not in an area where an oxide and/or a hydroxide exists, resulting in formation of lithium dendrites.

In one or more embodiments, the metal oxide layer 120 may be binder-free. For example, the metal oxide layer 120 may be formed on at least one surface of the metal substrate 110 by heat-treating the metal substrate 110. For example, the metal oxide layer 120 may have improved electrical conductivity because it does not include a binder. Thus, lithium metal may be more uniformly electrodeposited on the metal oxide layer 120.

In one or more embodiments, the metal oxide layer 120 may be copper oxide (CuO)-free. In some embodiments the metal oxide layer 120 may be substantially free of copper oxide (CuO) such that CuO is only present in the metal oxide layer 120, if at all, as an incidental impurity, or the metal oxide layer 120 may be completely free of CuO. For example, unlike titanium oxide ($TiO_2$), copper oxide (CuO) is not electrically conductive, and thus, lithium metal is not electrodeposited on a surface of the copper oxide (CuO). Thus, if the metal oxide layer 120 includes copper oxide (CuO), lithium metal may not be uniformly electrodeposited on a surface of the metal oxide layer 120. However, in the present disclosure, the metal oxide layer 120 is copper oxide (CuO)-free, and thus, lithium metal may be uniformly (e.g., substantially uniformly) electrodeposited on the electrode current collector 100.

In one or more embodiments, the metal oxide layer 120 may have a thickness of about 1 nm to about 600 nm. In one or more embodiments, the thickness of the metal oxide layer 120 may be in a range of about 1 nm to about 550 nm, about 1 nm to about 500 nm, about 50 nm to about 600 nm, about 100 nm to about 600 nm, about 200 nm to about 600 nm, about 300 nm to about 600 nm, about 400 nm to about 600 nm, or about 400 nm to about 500 nm.

In one or more embodiments, the crystalline titanium oxide ($TiO_2$) may include an anatase structure and/or a rutile structure.

In one or more embodiments, the metal oxide layer 120 may totally cover all surfaces of the metal substrate 110.

In one or more embodiments, the metal substrate 110 may have a thickness of about 1 $\mu m$ to about 50 $\mu m$.

In one or more embodiments, the metal substrate 110 may include a base film and a metal layer on one or both sides (e.g., two opposing sides) of the base film, and the metal layer may include titanium (Ti).

In one or more embodiments, the base film may include a metal and/or a polymer, and the metal of the base film may include indium (In), copper (Cu), magnesium (Mg), titanium (Ti), iron (Fe), cobalt (Co), nickel (Ni), zinc (Zn), aluminum (Al), germanium (Ge), lithium (Li), and/or an alloy thereof, and the polymer of the base film may include polyethylene terephthalate (PET), polyethylene (PE), polypropylene (PP), polybutylene terephthalate (PBT), polyimide (PI), or a combination thereof.

For example, if the base film includes a polymer, the polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. Due to including a thermoplastic polymer, the base film melts if a short circuit occurs, and thus a rapid increase in current may be suppressed or reduced. The base film may be, for example, an insulator (e.g., an electrical insulator).

For example, if the base film includes a metal, the metal may include indium (In), copper (Cu), magnesium (Mg), titanium (Ti), iron (Fe), cobalt (Co), nickel (Ni), zinc (Zn), aluminum (Al), germanium (Ge), lithium (Li), and/or an alloy thereof.

For example, if the thickness of the metal layer is reduced, the limit current and/or the maximum current of the electrode current collector 100 may be reduced, and thus, the stability of a lithium battery in the event of short circuit may be improved.

In one or more embodiments, a lead tab may be added on the electrode current collector 100 for connection to the outside. The lead tab may be welded to the electrode current collector 100 by ultrasonic welding, laser welding, spot welding, and/or the like. The metal layer may be electrically connected to the lead tab while the base film and/or the metal layer is melted during welding. To make welding between the metal layer and the lead tab more rigid, a metal chip may be added between the metal layer and the lead tab. The metal chip may be foil of the same material as a metal of the metal layer. The metal chip may be, for example, metal foil and/or metal mesh. The metal chip may be, for example, aluminum foil, copper foil, and/or SUS foil. The lead tab may be welded to a metal chip/metal layer stack or a metal chip/metal layer/base film stack by welding to the lead tab after the metal chip is provided on the metal layer. The metal layer or the metal layer/metal chip stack may be electrically connected to the lead tab while the base film, the metal layer, and/or the metal chip are melted during welding. A metal chip and/or a lead tab may be added on a portion of the metal layer.

For example, the base film may have a thickness of, for example, about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. If the thickness of the base film is within the above ranges, the weight of an electrode assembly may be more effectively reduced. The base film may have a melting point of, for example, about 100 °C to about 300 °C, about 100 °C to about 250 °C, or about 100 °C to about 200 °C. If the melting point of the base film is within the above ranges, the base film may be melted and easily coupled to the lead tab in the lead tab welding process. Surface treatment such as corona treatment may be performed on the base film to improve the adhesion between the base film and the metal layer. The metal layer may have a thickness of, for example, about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. If the thickness of the metal layer is within the above ranges, the stability of an anode may be secured while maintaining conductivity (e.g., electrical conductivity). The metal chip may have a thickness of, for example, about 2 $\mu$m to about 10 $\mu$m, about 2 $\mu$m to about 7 $\mu$m, or about 4 $\mu$m to about 6 $\mu$m. If the thickness of the metal chip is within the above ranges, connection between the metal layer and the lead tab may be more facilitated or improved. If the electrode current collector 100 has this structure, the weight of an electrode may be reduced, resulting in improved energy density.

For example, the electrode current collector 100 may be in the form of one selected from a sheet, foil, a film, a plate, a porous body, a mesoporous body, a through-hole-containing body, a polygonal ring body, a mesh body, a foam, and nonwoven fabric. However, the present disclosure is not limited to these shapes and any suitable shape generally used in the art is possible.

For example, the electrode current collector 100 may have a reduced thickness compared to existing electrode current collectors. Thus, the electrode current collector according to embodiments of the present disclosure may include a thin-film electrode current collector, which is distinguished from an existing electrode including a thick-film current collector. By employing a thin-film current collector having a reduced thickness as the electrode current collector according to one or more embodiments, the thickness of an electrode active material layer and/or a lithium electrodeposition layer may be relatively increased. As a result, a lithium battery employing the electrode current collector 100 may have increased energy density. The thickness of the electrode current collector 100 may be, for example, less than 15 $\mu$m, 14.5 $\mu$m or less, or 14 $\mu$m or less. The thickness of the electrode current collector 100 may be in a range of, for example, greater than or equal to about 0.1 $\mu$m and less than about 15 $\mu$m, about 1 $\mu$m to about 14.5 $\mu$m, about 2 $\mu$m to about 14 $\mu$m, about 3 $\mu$m to about 14 $\mu$m, about 5 $\mu$m to about 14 $\mu$m, or about 10 $\mu$m to about 14 $\mu$m.

**Method of manufacturing electrode current collector**

A method of manufacturing the electrode current collector 100, according to one or more embodiments, will be further described below.

The method of manufacturing the electrode current collector 100, according to one or more embodiments, may include: preparing the metal substrate 110; and heat-treating the metal substrate 110 to provide the metal oxide layer 120 on at least one surface of the metal substrate 110, in which the metal substrate 110 may include titanium (Ti), and the metal oxide layer 120 may include crystalline titanium oxide ($TiO_2$). For example, through oxidization of titanium (Ti) included in the metal substrate 110 by the heat treatment, the metal oxide layer 120 including titanium oxide ($TiO_2$) may be formed on the metal substrate 110.

In one or more embodiments, the heat treatment may be performed inside a heating chamber (e.g., a kiln).

In one or more embodiments, the heat treatment may include a purging process of injecting oxygen ($O_2$) into the heating chamber or kiln and a temperature raising process of raising a temperature inside the heating chamber or kiln to a heat treatment temperature (e.g., a maximum temperature).

In one or more embodiments, the heat treatment temperature or maximum temperature may be in a range of about 200 °C to about 800 °C.

In one or more embodiments, the temperature raising process may include raising the temperature inside the heating chamber or kiln from room temperature to the heat treatment temperature or maximum temperature at a heating rate of about 1 °C/min to about 100 °C/min.

In one or more embodiments, the heat treatment may include maintaining the temperature inside the heating chamber or kiln at the heat treatment temperature or maximum temperature, and the maintenance of the temperature inside the heating chamber or kiln at the heat treatment temperature or maximum temperature may be performed for about 0.1 minutes to about 180 minutes.

**Lithium battery**

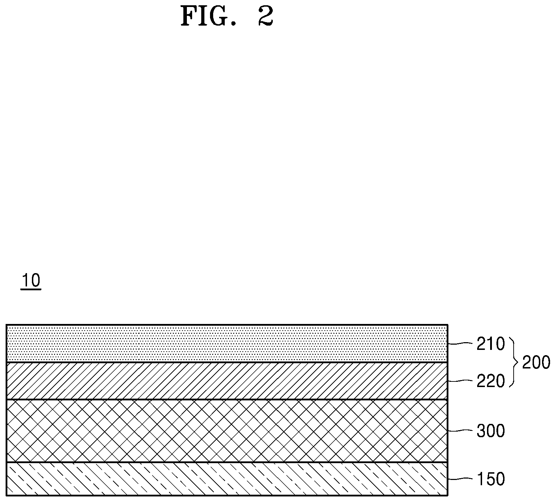

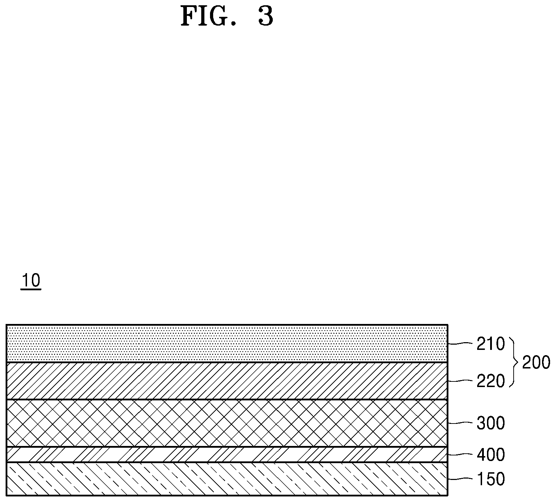

FIGS. 2 and 3 are schematic cross-sectional views of a lithium battery 10 according to one or more embodiments.

Referring to FIGS. 2 and 3, the lithium battery 10 according to one or more embodiments may include the above-described electrode current collector 100. Due to inclusion of the above-described electrode current collector 100 in the lithium battery 10, lithium metal may be uniformly (e.g., uniformly) electrodeposited on the improved electrode current collector 100, and thus, the formation of lithium dendrites may be prevented or reduced.

The lithium battery 10 may be, for example, a lithium primary battery, a lithium secondary battery, a lithium-sulfur battery, a lithium-air battery, and/or the like, but the present disclosure is not limited thereto and the lithium battery 10 may be any suitable lithium battery generally used in the art.

The lithium battery 10 may be manufactured by, for example, the following method, but the present disclosure is not limited to this method and the manufacturing method may be adjusted according to desired or required conditions.

In one or more embodiments, the lithium battery 10 may include: a cathode 200; an anode 150; and an electrolyte 300 between the cathode 200 and the anode 150, in which at least one of the cathode 200 and the anode 150 may include the above-described electrode current collector 100.

In one or more embodiments, the anode 150 may include the above-described electrode current collector 100.

**Anode current collector**

In one or more embodiments, the electrode current collector 100 may be an anode current collector.

In one or more embodiments, an anode active material layer may be free on an anode current collector before charging (e.g., the anode current collector may be free of an anode active material layer before charging such that there is no anode active material layer on the anode current collector before charging). For example, a lithium metal layer may be free on the anode current collector before charging (e.g., the anode current collector may be free of a lithium metal layer before charging such that there is no lithium metal layer on the anode current collector before charging). For example, in a lithium battery in which an anode active material layer or a lithium metal layer is free on the anode current collector before charging and discharging (e.g., the anode current collector may be free of an anode active material layer and a lithium metal layer before charging and discharging), the formation of dendrites may be prevented or reduced, resulting in more improved lifespan characteristics.

In some embodiments, in the electrode current collector 100, the metal substrate 110 may include titanium (Ti), and the metal oxide layer 120 may include crystalline titanium oxide ($TiO_2$), and thus, lithium metal may be uniformly (e.g., substantially uniformly) electrodeposited on the anode current collector.

**Anode: Lithium electrodeposition layer**

In one or more embodiments, if the electrode current collector 100 is an anode current collector, a lithium electrodeposition layer 400 may be on the anode 150 after charging. For example, after charging, the lithium electrodeposition layer 400 may be on the electrode current collector 100. For example, the lithium electrodeposition layer 400 may include lithium metal and/or a lithium alloy.

For example, the lithium electrodeposition layer 400 may include a lithium alloy and lithium metal. For example, the lithium alloy included in the lithium electrodeposition layer 400 may weaken the reactivity of lithium metal, and thus, side reactions between the lithium electrodeposition layer and an electrolyte, which will be further described below, may be effectively prevented or reduced.

For example, the lithium alloy is an alloy of lithium ions and metal ions included in a metal salt, and the metal ions may include a lithiophilic metal. In some embodiments, the lithium alloy may be an alloy of lithium and a lithiophilic metal. For example, if the lithiophilic metal is silver (Ag), the lithium alloy may include a Li-Ag alloy.

## Cathode

For example, the cathode 200 may include a cathode current collector 210 and a cathode active material layer 220 on the cathode current collector 210.

## Cathode: Cathode current collector

For example, the cathode 200 may include the cathode current collector 210. For example, the cathode active material layer 220 may be on the cathode current collector 210 to prepare the cathode 200.

For example, the cathode current collector 210 may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or an alloy thereof.

In one or more embodiments, the cathode current collector 210 may include aluminum (Al).

In one or more embodiments, the cathode current collector 210 may include, for example, a base film and a metal layer on one or both sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. By including a thermoplastic polymer, the base film liquefies if a short circuit occurs, and thus a rapid increase in current may be suppressed or reduced. The base film may be, for example, an insulator (e.g., an electrical insulator). The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), and/or an alloy thereof. The metal layer may act as an electrochemical fuse and break in case of overcurrent to perform a short-circuit prevention function. The limit current and the maximum current may be adjusted by adjusting the thickness of the metal layer. The metal layer may be plated and/or deposited on the base film. If the thickness of the metal layer is reduced, the limit current and/or the maximum current of the cathode current collector 140 may be reduced, and thus, the stability of a lithium battery in the event of short circuit may be improved. A lead tab may be added on the metal layer for connection to the outside. The lead tab may be welded to the metal layer or a metal layer/base film stack by ultrasonic welding, laser welding, spot welding, and/or the like. The metal layer may be electrically connected to the lead tab while the base film and/or the metal layer is melted during welding. To make welding between the metal layer and the lead tab more rigid, a metal chip may be added between the metal layer and the lead tab. The metal chip may be a foil of the same material as a metal of the metal layer. The metal chip may be, for example, a metal foil and/or a metal mesh. The metal chip may be, for example, aluminum foil, copper foil, and/or SUS foil. The lead tab may be welded to a metal chip/metal layer stack or a metal chip/metal layer/base film stack by welding to the lead tab after the metal chip is provided on the metal layer. The metal layer or the metal layer/metal chip stack may be electrically connected to the lead tab while the base film, the metal layer, and/or the metal chip are melted during welding. A metal chip and/or a lead tab may be added on a portion of the metal layer. The base film may have a thickness of, for example, about 1 μm to about 50 μm, about 1.5 μm to about 50 μm, about 1.5 μm to about 40 μm, or about 1 μm to about 30 μm. If the thickness of the base film is within the above ranges, the weight of a cathode current collector may be more effectively reduced. The base film may have a melting point of, for example, about 100 °C to about 300 °C, about 100 °C to about 250 °C, or about 100 °C to about 200 °C. If the melting point of the base film is within the above ranges, the base film may be melted and easily coupled to the lead tab in the lead tab welding process. Surface treatment such as corona treatment may be performed on the base film to improve the adhesion between the base film and the metal layer. The metal layer may have a thickness of, for example, about 0.01 μm to about 3 μm, about 0.1 μm to about 3 μm, about 0.1 μm to about 2 μm, or about 0.1 μm to about 1 μm. If the thickness of the metal layer is within the above ranges, the stability of an electrode assembly may be secured while maintaining conductivity (e.g., electrical conductivity). The metal chip may have a thickness of, for example, about 2 μm to about 10 μm, about 2 μm to about 7 μm, or about 4 μm to about 6 μm. If the thickness of the metal chip is within the above ranges, connection between the metal layer and the lead tab may be more facilitated or improved. If the cathode current collector 210 has this structure, the weight of an electrode may be reduced, resulting in improved energy density.

## Cathode: Cathode active material layer

The cathode active material layer 220 may include a cathode active material, a conductive material (e.g., an electrically conductive material), and a binder.

For example, the cathode active material may be at least one composite oxide of lithium and a metal selected from cobalt, manganese, nickel, and a combination thereof, and may be, for example, a compound represented by any one of the following formulae: $Li_aA_{1-b}B^1_bD^1_2$ where $0.90 \leq a \leq 1.8$ and $0 \leq b \leq 0.5$; $Li_aE_{1-b}B^1_bO_{2-c}D^1_c$ where $0.90 \leq a \leq 1.8$, $0 \leq b \leq$

0.5, and $0 \leq c \leq 0.05$; $LiE_{2-b}B^1{}_bO_{4-c}D^1{}_c$ where $0 \leq b \leq 0.5$ and $0 \leq c \leq 0.05$; $Li_aNi_{1-b-c}Co_bB^1{}_cD^1{}_\alpha$ where $0.90 \leq a \leq 1.8$, $0 \leq b \leq 0.5$, $0 \leq c \leq 0.05$, and $0 < \alpha \leq 2$; $Li_aNi_{1-b-c}Co_bB^1{}_cO_{2-\alpha}F^1{}_\alpha$ where $0.90 \leq a \leq 1.8$, $0 \leq b \leq 0.5$, $0 \leq c \leq 0.05$, and $0 < \alpha < 2$; $Li_aNi_{1-b-c}Co_bB^1{}_cO_{2-\alpha}F^1{}_2$ where $0.90 \leq a \leq 1.8$, $0 \leq b \leq 0.5$, $0 \leq c \leq 0.05$, and $0 < \alpha < 2$; $Li_aNi_{1-b-c}Mn_bB^1{}_cD_\alpha$ where $0.90 \leq a \leq 1.8$, $0 \leq b \leq 0.5$, $0 \leq c \leq 0.05$, and $0 < \alpha \leq 2$; $Li_aNi_{1-b-c}Mn_bB^1{}_cO_{2-\alpha}F^1{}_\alpha$ where $0.90 \leq a \leq 1.8$, $0 \leq b \leq 0.5$, $0 \leq c \leq 0.05$, and $0 < \alpha < 2$; $Li_aNi_{1-b-c}Mn_bB^1{}_cO_{2-\alpha}F^1{}_2$ where $0.90 \leq a \leq 1.8$, $0 \leq b \leq 0.5$, $0 \leq c \leq 0.05$, and $0 < \alpha < 2$; $Li_aNi_bE_cG_dO_2$ where $0.90 \leq a \leq 1.8$, $0 \leq b \leq 0.9$, $0 \leq c \leq 0.5$, and $0.001 \leq d \leq 0.1$; $Li_aNi_bCo_cMn_dG_eO_2$ where $0.90 \leq a \leq 1.8$, $0 \leq b \leq 0.9$, $0 \leq c \leq 0.5$, $0 \leq d \leq 0.5$, and $0.001 \leq e \leq 0.1$; $Li_aNiG_bO_2$ where $0.90 \leq a \leq 1.8$ and $0.001 \leq b \leq 0.1$; $Li_aCoG_bO_2$ where $0.90 \leq a \leq 1.8$ and $0.001 \leq b \leq 0.1$; $Li_aMnG_bO_2$ where $0.90 \leq a \leq 1.8$ and $0.001 \leq b \leq 0.1$; $Li_aMnG_bO_4$ where $0.90 \leq a \leq 1.8$ and $0.001 \leq b \leq 0.1$; $QO_2$; $QS_2$; $LiQS_2$; $V_2O_5$; $LiV_2O_5$; $LiIO_2$; $LiNiVO_4$; $Li_{(3-f)}J_2(PO_4)_3$ where $0 \leq f \leq 2$; $Li_{(3-f)}Fe_2(PO_4)_3$ where $0 \leq f \leq 2$; and $LiFePO_4$.

In the above formulae, A may be nickel (Ni), cobalt (Co), manganese (Mn), or a combination thereof, $B^1$ may be aluminum (Al), Ni, Co, Mn, chromium (Cr), iron (Fe), magnesium (Mg), strontium (Sr), vanadium (V), gallium (Ga), silicon (Si), tungsten (W), molybdenum (Mo), copper (Cu), zinc (Zn), titanium (Ti), boron (B), a rare earth element, or a combination thereof, $D^1$ may be oxygen (O), fluorine (F), sulfur (S), phosphorus (P), or a combination thereof, E may be Co, Mn, or a combination thereof, $F^1$ may be F, S, P, chlorine (Cl), bromine (Br), or a combination thereof, G may be Al, Cr, Mn, Fe, Mg, lanthanum (La), cerium (Ce), Sr, V, or a combination thereof, Q may be Ti, Mo, Mn, or a combination thereof, I may be Cr, V, Fe, scandium (Sc), yttrium (Y), or a combination thereof, and J may be V, Cr, Mn, Co, Ni, Cu, or a combination thereof.

For example, the cathode active material may include a lithium transition metal oxide containing nickel and other transition metals. In the lithium transition metal oxide containing nickel and other transition metals, a nickel content may be 60 mol% or more, for example, 75 mol% or more, for example, 80 mol% or more, for example, 85 mol% or more, for example, 90 mol% or more, with respect to a total number of moles of the transition metals.

For example, the lithium transition metal oxide may be a compound represented by Formula 1:

Formula 1      $Li_aNi_xCo_yM_zO_{2-b}A_b$

wherein, in Formula 1, $1.0 \leq a \leq 1.2$, $0 \leq b \leq 0.2$, $0.6 \leq x < 1$, $0 \leq y \leq 0.3$, $0 < z \leq 0.3$, and $x+y+z=1$, M may be at least one selected from manganese (Mn), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), and boron (B), and
A may be F, S, Cl, Br, or a combination thereof.

In Formula 1, for example, the following conditions may be satisfied: $0.7 \leq x < 1$, $0 < y \leq 0.3$, and $0 < z \leq 0.3$; $0.8 \leq x < 1$, $0 < y \leq 0.3$, and $0 < z \leq 0.3$; $0.8 \leq x < 1$, $0 < y \leq 0.2$, and $0 < z \leq 0.2$; $0.83 \leq x < 0.97$, $0 < y \leq 0.15$, and $0 < z \leq 0.15$; or $0.85 \leq x < 0.95$, $0 < y \leq 0.1$, and $0 < z \leq 0.1$.

For example, the lithium transition metal oxide may be at least one of compounds represented by Formulae 1-1 and 1-2:

Formula 1-1      $LiNi_xCo_yMn_zO_2$

wherein, in Formula 1-1, $0.6 \leq x \leq 0.95$, $0 < y \leq 0.2$, and $0 < z \leq 0.1$. For example, $0.7 \leq x \leq 0.95$, $0 < y \leq 0.3$, and $0 < z \leq 0.3$,

Formula 1-2      $LiNi_xCo_yAl_zO_2$

wherein, in Formula 1-2, $0.6 \leq x \leq 0.95$, $0 < y \leq 0.2$, and $0 < z \leq 0.1$. For example, $0.7 \leq x \leq 0.95$, $0 < y \leq 0.3$, and $0 < z \leq 0.3$. For example, $0.8 \leq x \leq 0.95$, $0 < y \leq 0.3$, and $0 < z \leq 0.3$. For example, $0.82 \leq x \leq 0.95$, $0 < y \leq 0.15$, and $0 < z \leq 0.15$. For example, $0.85 \leq x \leq 0.95$, $0 < y \leq 0.1$, and $0 < z \leq 0.1$.

For example, the lithium transition metal oxide may be $LiNi_{0.6}Co_{0.2}Mn_{0.2}O_2$, $LiNi_{0.88}Co_{0.08}Mn_{0.04}O_2$, $LiNi_{0.8}Co_{0.15}Mn_{0.05}O_2$, $LiNi_{0.8}Co_{0.1}Mn_{0.1}O_2$, $LiNi_{0.88}Co_{0.1}Mn_{0.02}O_2$, $LiNi_{0.8}Co_{0.15}Al_{0.05}O_2$, $LiNi_{0.8}Co_{0.1}Mn_{0.2}O_2$, and/or $LiNi_{0.88}Co_{0.1}Al_{0.02}O_2$.

For example, as the cathode active material, the lithium transition metal oxide having a coating layer on a surface thereof may be used, or a mixture of the lithium transition metal oxide and a lithium transition metal oxide having a coating layer may be used.

For example, the coating layer may include a coating element compound, such as an oxide of a coating element, a hydroxide of the coating element, an oxyhydroxide of the coating element, an oxycarbonate of the coating element, or a hydroxycarbonate of the coating element.

For example, the compound constituting the coating layer may be amorphous or crystalline. The coating element included in the coating layer may be Mg, Al, Co, potassium (K), sodium (Na), calcium (Ca), silicon (Si), Ti, V, tin (Sn), germanium (Ge), gallium (Ga), boron (B), arsenic (As), zirconium (Zr), or a mixture thereof. A coating layer formation process may be performed using any suitable coating method (e.g., spray coating, immersion, and/or the like) that does not adversely affect the physical properties of the cathode active material, by using the coating elements in the lithium transition metal oxide. The coating methods can be well understood by those of ordinary skill in the art upon reviewing this disclosure, and thus, further detailed descriptions thereof are not necessary here.

The conductive material may include carbon black, graphite fine particles, and/or the like, but the present disclosure is not limited thereto, and any suitable material that may be used as a conductive material (e.g., an electrically conductive material) in the art may be used.

The binder may be a vinylidene fluoride/hexafluoropropylene copolymer, polyvinylidene fluoride (PVDF), polyacrylonitrile, polymethyl methacrylate, polytetrafluoroethylene, and/or a styrene butadiene rubber-based polymer, but the present disclosure is not limited thereto, and any suitable binder that may be used as a binder in the art may be used.

**Electrolyte**

In one or more embodiments, the lithium battery 10 may include the electrolyte 300 between the cathode 200 and the anode 150.

The electrolyte 300 may be, for example, a liquid electrolyte, a solid electrolyte, a gel electrolyte, or a combination thereof.

The electrolyte 300 may be, for example, an organic electrolyte solution. The organic electrolyte solution may be prepared by, for example, dissolving a lithium salt in an organic solvent.

The organic solvent may be any suitable organic solvent used in the art. The organic solvent may be, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethylsulfoxide, dioxane, 1,2-dimethoxyethane, sulfolane, dichloroethane, chlorobenzene, nitrobenzene, diethylene glycol, dimethyl ether, a mixture thereof, and/or the like.

The lithium salt may be any suitable lithium salt used in the art. Non-limiting examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ where $1 \leq x \leq 20$ and $1 \leq y \leq 20$, LiCl, LiI, and a mixture thereof. The concentration of the lithium salt may be, for example, in a range of about 0.1 M to about 5.0 M.

The solid electrolyte may be, for example, an oxide-based solid electrolyte, a sulfide-based solid electrolyte, a polymer solid electrolyte, or a combination thereof.

The solid electrolyte may be, for example, an oxide-based solid electrolyte. The oxide-based solid electrolyte may be at least one selected from $Li_{1+x+y}Al_xTi_{2-x}Si_yP_{3-y}O_{12}$ where $0<x<2$ and $0 \leq y<3$, $BaTiO_3$, $Pb(Zr,Ti)O_3(PZT)$, $Pb_{1-x}La_xZr_{1-y}Ti_yO_3(PLZT)$ where $0 \leq x<1$ and $0 \leq y<1$, $PB(Mg_3Nb_{2/3})O_3-PbTiO_3(PMN-PT)$, $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ where $0<x<2$ and $0<y<3$, $Li_xAl_yTi_z(PO_4)_3$ where $0<x<2$, $0<y<1$, and $0<z<3$, $Li_{1+x+y}(Al, Ga)_x(Ti, Ge)_{2-x}Si_yP_{3-y}O_{12}$ where $0 \leq x \leq 1$ and $0 \leq y \leq 1$, $Li_xLa_yTiO_3$ where $0<x<2$ and $0<y<3$, $Li_2O$, LiOH, $Li_2CO_3$, $LiAlO_2$, $Li_2O-Al_2O_3-SiO_2-P_2O_5-TiO_2-GeO_2$, and $Li_{3+x}La_3M_2O_{12}$ where M = Te, Nb, or Zr, and x is an integer from 1 to 10. The solid electrolyte may be prepared by a sintering method and/or the like. For example, the oxide-based solid electrolyte may be a garnet-type solid electrolyte selected from $Li_7La_3Zr_2O_{12}(LLZO)$ and $Li_{3+x-}La_3Zr_{2-a}M_aO_{12}$ (M= doped LLZO, M=Ga, W, Nb, Ta, or Al, and x is an integer from 1 to 10).

The sulfide-based solid electrolyte may include, for example, lithium sulfide, silicon sulfide, phosphorus sulfide, boron sulfide, or a combination thereof. Sulfide-based solid electrolyte particles may include $Li_2S$, $P_2S_5$, $SiS_2$, $GeS_2$, $B_2S_3$, or a combination thereof. The sulfide-based solid electrolyte particles may be $Li_2S$ and/or $P_2S_5$. Sulfide-based solid electrolyte particles have higher lithium ion conductivity than other inorganic compounds. For example, the sulfide-based solid electrolyte may include $Li_2S$ and $P_2S_5$. If a sulfide solid electrolyte material constituting the sulfide-based solid electrolyte includes $Li_2S-P_2S_5$, a mixing molar ratio of $Li_2S$ to $P_2S_5$ may be, for example, in a range of about 50:50 to about 90:10. In some embodiments, an inorganic solid electrolyte prepared by adding $Li_3PO_4$, a halogen, a halogen compound, $Li_{2+2x}Zn_{1-x}GeO_4$ ("LISICON", $0 \leq x<1$), $Li_{3+y}PO_{4-x}N_x$ ("LIPON") where $0<x<4$ and $0<y<3$, $Li_{3.25}Ge_{0.25}P_{0.75}S_4$ ("ThioLISICON"), $Li_2O-Al_2O_3-TiO_2-P_2O_5$ ("LATP"), and/or the like to an inorganic solid electrolyte such as $Li_2S-P_2S_5$, $SiS_2$, $GeS_2$, $B_2S_3$, or a combination thereof may be used as a sulfide solid electrolyte. Non-limiting examples of the sulfide solid electrolyte material may include: $Li_2S-P_2S_5$; $Li_2S-P_2S_5$-LiX (X= a halogen element); $Li_2S-P_2S_5-Li_2O$; $Li_2S-P_2S_5-Li_2O-LiI$; $Li_2S-SiS_2$; $Li_2S-SiS_2-LiI$; $Li_2S-SiS_2-LiBr$; $Li_2S-SiS_2-LiCl$; $Li_2S-SiS_2-B_2S_3-LiI$; $Li_2S-SiS_2-P_2S_5-LiI$; $Li_2S-B_2S_3$; $Li_2S-P_2S_5-Z_mS_n$ where $0<m<10$, $0<n<10$, and Z=Ge, Zn, or Ga; $Li_2S-GeS_2$; $Li_2S-SiS_2-Li_3PO_4$; and $Li_2S-SiS_2-Li_pMO_q$ where $0<p<10$, $0<q<10$, and M=P, Si, Ge, B, Al, Ga, or In. In this regard, the sulfide-based solid electrolyte material may be prepared by treating a raw starting material of the sulfide-based solid electrolyte material (e.g., $Li_2S$, $P_2S_5$ and/or the like) by a melt quenching method, a mechanical milling method, and/or the like. In other embodiments, calcinations may be performed after the treatment. The sulfide-based solid electrolyte may be amorphous or crystalline, or in a mixed state.

The polymer solid electrolyte may be, for example, an electrolyte including a mixture of a lithium salt and a polymer or a polymer having an ion-conducting functional group. The polymer solid electrolyte may be, for example, a polymer electrolyte that does not include a liquid electrolyte. Examples of the polymer included in the polymer solid electrolyte may include, but are not limited to, polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethyleneoxide-styrene) block copolymer, polystyrene sulfonate (PSS), polyvinyl fluoride (PVF), poly(methyl methacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, polyacetylene, Nafion, Aquivion , Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi$^+$), or a combination thereof, and any suitable solid electrolyte used in the art may be used. The lithium salt may be any suitable lithium salt that may be used in the art. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ where x and y are each 1 to 20, LiCl, Lil, or a mixture thereof.

The gel electrolyte may be, for example, a gel polymer electrolyte. The gel polymer electrolyte may be, for example, an electrolyte including a liquid electrolyte and a polymer and/or an electrolyte including an organic solvent and a polymer having an ion-conducting functional group. The liquid electrolyte may be, for example, an ionic liquid, a mixture of a lithium salt and an organic solvent, a mixture of an ionic liquid and an organic solvent, or a mixture of a lithium salt, an ionic liquid, and an organic solvent. The polymer may be selected from the polymers used in the solid polymer electrolyte. The organic solvent may be selected from organic solvents used in the liquid electrolyte. The lithium salt may be selected from the lithium salts used in the solid polymer electrolyte. The ionic liquid may refer to a salt in a liquid state at room temperature or a room temperature molten salt that has a melting point below room temperature and consists only of ions. The ionic liquid may include, for example, at least one selected from compounds including: a) at least one cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof; and b) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, Cl-, Br-, I-, $BF_4^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. The polymer solid electrolyte may be impregnated into an electrolyte solution in a lithium battery, thereby providing a gel polymer electrolyte. The gel electrolyte may further include inorganic particles.

**Separator**

The lithium battery according to one or more embodiments may further include a separator.

For example, the separator may be a single layer of polyethylene, polypropylene, and/or polyvinylidene fluoride, or a plurality of layers of at least two of these materials. Also, the separator may be a mixed multi-layer, such as a two-layered polyethylene/polypropylene separator, a three-layered polyethylene/polypropylene/polyethylene separator, a three-layered polypropylene/polyethylene/polypropylene separator, and/or the like.

In one or more embodiments, a battery case including the lithium battery 10 may have a cylindrical shape, a rectangular shape, a thin-film shape, or the like. For example, the lithium battery may be a large-scale thin-film-type battery. The lithium battery may be a lithium-ion battery.

In one or more embodiments, the lithium battery 10 may be, for example, a lithium-air battery, a lithium-sulfur battery, or the like.

In one or more embodiments, the lithium battery 10 has excellent lifespan characteristics and high-rate characteristics, and thus may be used in electric vehicles (EVs). For example, the lithium battery 10 may be used in hybrid vehicles such as plug-in hybrid electric vehicles (PHEVs). In other embodiments, the lithium battery 10 may be used in fields that utilize or require large amounts of power storage. For example, the lithium battery 10 may be used in electric bicycles, power tools, and/or the like.

If a plurality of the lithium batteries 10 according to one or more embodiments are stacked, a gel-type electrolyte may be between a cathode and a liquid-impermeable ion-conducting composite membrane. The gel-type electrolyte may include, for example, a VDF-HFP copolymer, a lithium salt, and a solvent.

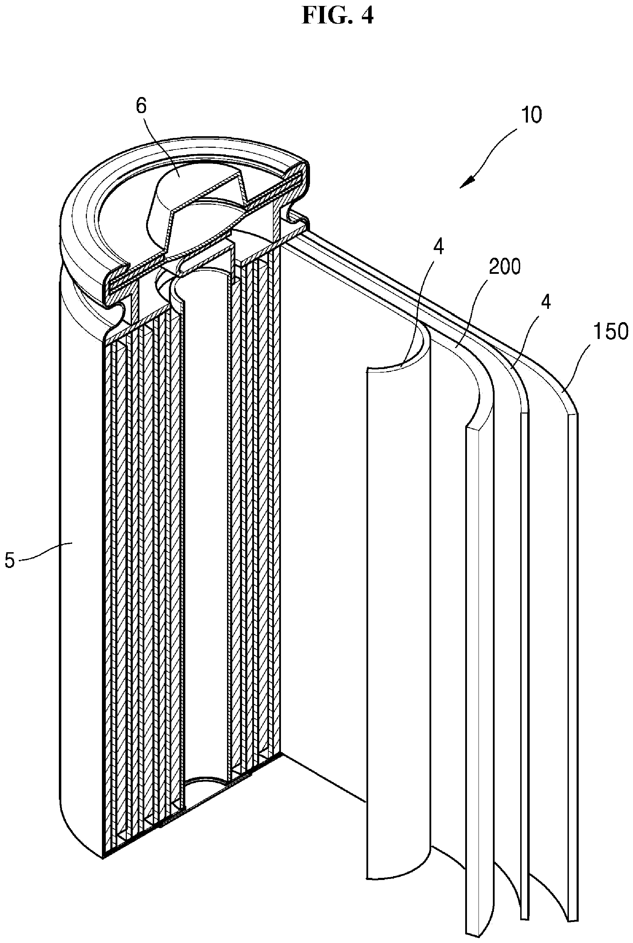

Referring to FIG. 4, the lithium battery 10 according to one or more embodiments includes a cathode 200, an anode 150 as described above, and a separator 4. The cathode 200, the anode 150, and the separator 4 may be wound and/or folded to provide a battery structure. The formed battery structure may be accommodated in a battery case 5. A polymer electrolyte may be injected into the battery case 5, and the battery case 5 may be sealed with a cap assembly 6, thereby completing the manufacture of the lithium battery 10. The battery case 5 may be, but is not limited to, cylindrical, but may have, for example, a rectangular shape, a thin-film shape, or the like.

For example, the cathode 200, the anode 150, and a polymer electrolyte including the separator 4 may be wound and/or folded to provide the battery structure. The formed battery structure may be accommodated in the battery case 5. A liquid electrolyte may be injected into the battery case 5, and the battery case 5 may be sealed with a cap assembly 9, thereby completing the manufacture of the lithium battery 10. The battery case 5 may be, but is not limited to, cylindrical, but may have, for example, a rectangular shape, a thin-film shape, or the like.

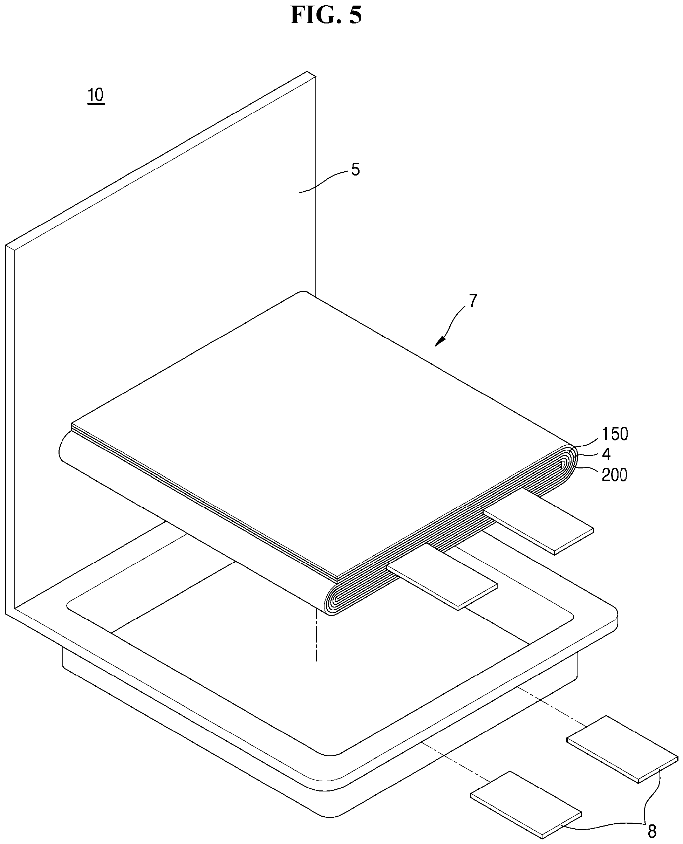

Referring to FIG. 5, the lithium battery 10 according to one or more embodiments includes the cathode 200, the anode 150 as described above, and the separator 4. The separator 4 may be between the cathode 200 and the anode 150, and the cathode 200, the anode 150, and the separator 4 may be wound and/or folded to provide the battery structure 7. The formed battery structure 7 may be accommodated in the battery case 5. The lithium battery 10 may include electrode tabs 8 that serve as electrical paths for guiding the current formed in the battery structure 7 to the outside. The above-described polymer electrolyte may be injected into the battery case 5, and the battery case 5 may be sealed, thereby completing the manufacture of the lithium battery 10.

For example, a polymer electrolyte including the separator 4 may be between the cathode 200 and the anode 150, and then the cathode 200, the anode 150, and the separator 4 may be wound and/or folded to provide the battery structure 7. The formed battery structure 7 may be accommodated in the battery case 5. The lithium battery 10 may include electrode tabs 8 that serve as electrical paths for guiding the current formed in the battery structure 7 to the outside. A liquid electrolyte may be injected into the battery case 5, and the battery case 5 may be sealed, thereby completing the manufacture of the lithium battery 10. The battery case 5 may be, but is not limited to, rectangular, but may have, for example, a cylindrical shape, a thin-film shape, or the like.

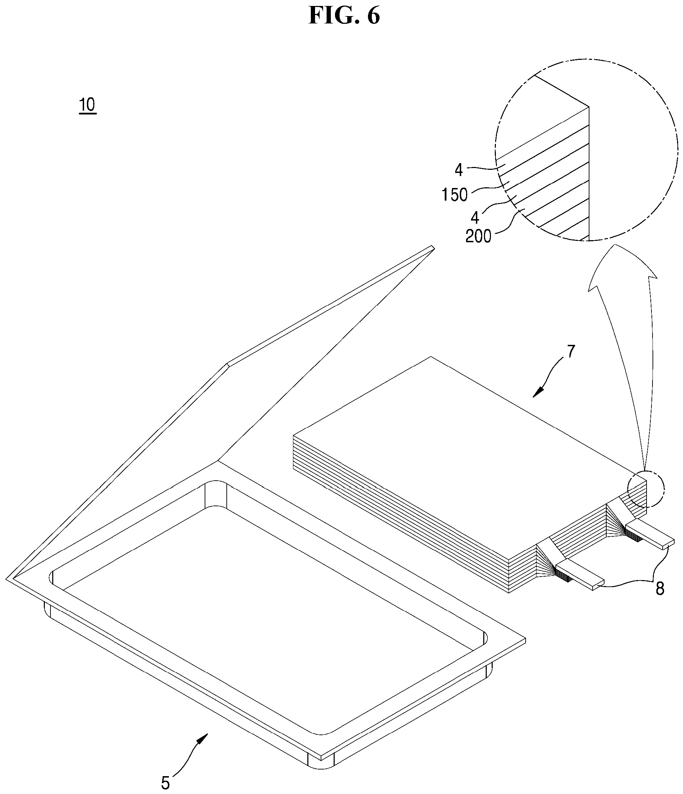

Referring to FIG. 6, the lithium battery 10 according to one or more embodiments includes the cathode 200, the anode 150 as described above, and the separator 4. The above-described polymer electrolyte including the separator 4 may be between the cathode 200 and the anode 150 to provide the battery structure 7. The battery structures 7 may be stacked in a bi-cell structure, and then may be accommodated in the battery case 5. The lithium battery 10 may include electrode tabs 8 that serve as electrical paths for guiding the current formed in the battery structure 7 to the outside. A liquid electrolyte may be injected into the battery case 5, and the battery case 5 may be sealed, thereby completing the manufacture of the lithium battery 10. The battery case 5 may be, but is not limited to, rectangular, but may have, for example, a cylindrical shape, a thin-film shape, or the like.

Pouch-type lithium batteries correspond to the lithium batteries of FIGS. 4 to 6, except that pouches are used as the battery cases. A pouch-type lithium battery may include at least one battery structure. A polymer electrolyte may be between a cathode and an anode to provide a battery structure. Battery structures may be stacked in a bi-cell structure, and then impregnated with a liquid electrolyte and accommodated in a pouch, and the pouch may be sealed, thereby completing the manufacture of a lithium battery. For example, in some embodiments, the cathode, the anode, and the polymer electrolyte including the separator as described above may be simply stacked and accommodated in a pouch in the form of an electrode assembly, or may be wound and/or folded into a jelly roll-shaped electrode assembly, and then accommodated in a pouch. Subsequently, a liquid electrolyte may be injected into the pouch, and the pouch may be sealed, thereby completing the manufacture of a lithium battery.

Lithium batteries have excellent lifespan characteristics and high-rate characteristics, and may be used, for example, in electric vehicles (EVs). For example, lithium batteries may be used in hybrid vehicles such as plug-in hybrid electric vehicles (PHEVs). In other embodiments, lithium batteries may be used in fields that utilize or require large amounts of power storage. For example, lithium batteries may be used in electric bicycles, power tools, and/or the like.

A plurality of lithium batteries may be stacked to provide a battery module, and a plurality of battery modules may form a battery pack. These battery packs may be used in any suitable devices that utilize or require high capacity and high output. For example, battery packs may be used in laptops, smartphones, electric vehicles, and/or the like. A battery module may include, for example, a plurality of batteries and a frame that holds the plurality of batteries. A battery pack may include, for example, a plurality of battery modules and a bus bar connecting the plurality of battery modules. The battery module and/or the battery pack may further include a cooling device. A plurality of battery packs may be controlled by a battery management system. The battery management system may include a battery pack and a battery control device connected to the battery pack.

Embodiments of the present disclosure will be described in further detail with reference to the following examples and comparative examples. However, these examples are provided for illustrative purposes only and are not intended to limit the scope of the present disclosure.

**Manufacture Example 1: Manufacture of electrode current collector**

10 $\mu$m-thick titanium metal foil was prepared as a metal substrate. The titanium metal was heated to a maximum temperature of 500 °C at a heating rate of 5 °C/min in a 100% oxygen atmosphere, and then heat-treated while maintaining the temperature at 500 °C for 2 hours, thereby providing a metal oxide layer including rutile titanium oxide on a surface of the titanium metal, to complete the manufacture of an electrode current collector. It was confirmed to be rutile $TiO_2$ by the

fact that the XRD spectrum result showed the strongest peak at a $2\theta$ value of 27.4°. The thickness of the formed metal oxide layer was 400 nm to 500 nm.

**Manufacture Example 2: Manufacture of electrode current collector**

10 $\mu$m-thick titanium metal foil was prepared as a metal substrate. The titanium metal was heated to a maximum temperature of 600 °C at a heating rate of 5 °C/min in a 100% oxygen atmosphere, and then heat-treated while maintaining the temperature at 600 °C for 2 hours, thereby providing a metal oxide layer including rutile titanium oxide on a surface of the titanium metal, to complete the manufacture of an electrode current collector. It was confirmed to be rutile $TiO_2$ by the fact that the XRD spectrum result showed the strongest peak at a $2\theta$ value of 27.4°. The thickness of the formed metal oxide layer was 400 nm to 500 nm.

**Manufacture Example 3: Manufacture of electrode current collector**

10 $\mu$m-thick titanium metal foil was prepared as a metal substrate. The titanium metal was heated to a maximum temperature of 250 °C at a heating rate of 5 °C/min in a 100% oxygen atmosphere, and then heat-treated at 250 °C for 2 hours, thereby providing a metal oxide layer including anatase titanium oxide on a surface of the titanium metal, to complete the manufacture of an electrode current collector. It was confirmed to be anatase $TiO_2$ by the fact that the XRD spectrum result showed the strongest peak at a $2\theta$ value of 25.3°. The thickness of the formed metal oxide layer was 400 nm to 500 nm.

**Comparative Manufacture Example 1: Manufacture of electrode current collector**

10 $\mu$m-thick copper metal foil was prepared as a metal substrate. It was confirmed through XPS analysis that an oxide layer including CuO and/or $Cu(OH)_2$ naturally exists on the surface of the copper foil product even without additional heat treatment.

**Comparative Manufacture Example 2: Manufacture of electrode current collector**

10 $\mu$m-thick titanium metal foil was prepared as a metal substrate. It was confirmed through XPS analysis that an oxide layer including amorphous $TiO_2$ naturally exists on the surface of the titanium foil product even without additional heat treatment.

**Comparative Manufacture Example** 3: **Manufacture of electrode current** collector

12 $\mu$m-thick aluminum metal foil was prepared as a metal substrate. It was confirmed through XPS analysis that an oxide layer including amorphous $Al_2O_3$ naturally exists on the surface of the aluminum foil product even without additional heat treatment.

Table 1

| Classification | Metal substrate | Metal oxide film |
|---|---|---|
| Manufacture Example 1 | Titanium metal | Rutile $TiO_2$ |
| Manufacture Example 2 | Titanium metal | Rutile $TiO_2$ |
| Manufacture Example 3 | Titanium metal | Anatase $TiO_2$ |
| Comparative Manufacture Example 1 | Copper metal | $Cu(OH)_2$ and CuO |
| Comparative Manufacture Example 2 | Titanium metal | Amorphous $TiO_2$ |
| Comparative Manufacture Example 3 | Aluminum metal | $Al_2O_3$ |

**Example 1: Manufacture of lithium battery (pouch cell)**

$LiNi_{0.6}Co_{0.2}Al_{0.2}O_2$, a conductive material (Super-P; Timcal Ltd.), a binder (PVDF), and N-methylpyrrolidone were mixed together to obtain a cathode composition. The mixing weight ratio of $LiNi_{0.6}Co_{0.2}Al_{0.2}O_2$, the conductive material, and the binder in the cathode composition was 97.5:1.5:1.

Aluminum foil (thickness: about 15 $\mu$m) was coated with the cathode composition, followed by drying in a vacuum at about 110 °C, to thereby complete the manufacture of a cathode.

The manufactured cathode, the electrode current collector according to Manufacture Example 1 as a counter electrode, a polyethylene separator, and a solution as an electrolyte obtained by dissolving 1.3 M $LiPF_6$ in ethylene carbonate (EC) + ethylmethyl carbonate (EMC) + dimethyl carbonate (DMC) (a volume ratio of 3:4:3) were used to manufacture a lithium battery (pouch cell).

**Examples 2 and 3 and Comparative Examples 1 to 3: Manufacture of lithium batteries (pouch cells)**

Lithium batteries (pouch cells) were manufactured in the same manner as in Example 1, except that the types of electrode current collectors used were changed to those shown in Table 2.

**Evaluation Example 1: Charge/discharge characteristics**

Each of the lithium batteries (pouch cells) manufactured according to Examples 1 to 3 and Comparative Examples 1 to 3 was charged at a constant current of 0.1 C rate and 45 °C until the voltage reached 4.30 V (vs. Li), and cut-off at a current of 0.05 C rate while maintaining a constant voltage of 4.30 V. Subsequently, each battery was discharged at a constant current of 0.1 C rate until the voltage reached 3.6 V (vs. Li) (formation process, $1^{st}$ cycle). This cycle of charging and discharging was performed once to complete the formation process.

Each lithium battery having undergone the formation process was charged at a constant current of 0.33 C and 45 °C in a voltage range of 3.6 V to 4.3 V vs. lithium metal, and then cut-off at a current of 0.05 C rate while maintaining a constant voltage of 4.30 V. Subsequently, each battery was discharged at a constant current of 1.0 C until the cut-off voltage reached 3.6 V. The above-described charging and discharging processes were repeatedly performed a total of 100 times.

In all the charging/discharging cycles, a rest period of 5 minutes was set after one charging/discharging cycle. In this regard, a capacity retention rate at $N^{th}$ cycle is defined using Equation 1.

Equation 1

$$\text{Capacity retention rate (\%)} = \left[ \frac{\text{discharge capacity at } N^{th} \text{cycle}}{\text{discharge capacity at } 1^{st} \text{ cycle}} \times 100 \right]$$

The cycle in which the capacity retention rate reached 80 % was measured, and the results thereof are shown in Table 2.

Table 2

| Classification | Metal substrate | Charge/discharge evaluation |
|---|---|---|
| | | Cycle to reach capacity retention rate of 80 % |
| Example 1 | Manufacture Example 1 | 176 |
| Example 2 | Manufacture Example 2 | 192 |
| Example 3 | Manufacture Example 3 | 166 |
| Comparative Example 1 | Comparative Manufacture Example 1 | 158 |
| Comparative Example 2 | Comparative Manufacture Example 2 | 148 |
| Comparative Example 3 | Comparative Manufacture Example 3 | 43 |

Referring to Table 2, Examples 1 to 3 exhibited excellent capacity characteristics and capacity retention characteristics due to uniform electrodeposition of lithium metal on the surfaces of respective electrode current collectors, by including the electrode assemblies according to Manufacture Examples 1 to 3, compared to Comparative Examples 1 to 3 including the electrode assemblies according to Comparative Manufacture Examples 1 to 3, respectively.

While one or more embodiments of the present disclosure have been described with reference to the accompanying drawings and examples, these embodiments are provided only for illustrative purposes, and it will be understood by one of ordinary skill in the art that various modifications and other embodiments equivalent thereto can be made. Thus, the scope of the present disclosure should be defined by the appended claims, and equivalents thereof.

An electrode current collector according to one or more embodiments may include titanium (Ti) and crystalline titanium oxide (TiO2) on a surface of the electrode current collector, thus improving lithium electrodeposition. The

crystalline titanium oxide ($TiO_2$) provided thinly on the surface exhibits electrical conductivity even after intercalation of a small amount of lithium, and thus exhibits electrical conductivity over the entire surface of the titanium current collector, thus enabling lithium electrodeposition over the entire surface of the titanium current collector.

Thus, lithium metal may be more uniformly on the titanium electrode current collector including crystalline titanium oxide on the surface thereof. Also, in a lithium battery including the electrode current collector, the initial formation of dendrites (e.g., lithium dendrites) may be suppressed or reduced.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the present disclosure as defined by the following claims, and equivalents thereof.

## Claims

1. An electrode current collector (100) comprising:

   a metal substrate (110); and
   a metal oxide layer (120) on at least one surface of the metal substrate (110),
   wherein the metal substrate (110) comprises titanium (Ti), and
   the metal oxide layer (120) comprises crystalline titanium oxide ($TiO_2$).

2. The electrode current collector (100) as claimed in claim 1, wherein the metal oxide layer (120) is binder-free and/or free of copper hydroxide ($Cu(OH)_2$) and copper oxide (CuO).

3. The electrode current collector (100) as claimed in claim 1 or 2, wherein the metal oxide layer (120) has a thickness of about 1 nm to about 600 nm.

4. The electrode current collector (100) as claimed in any of the claims 1 to 3, wherein the crystalline titanium oxide has an anatase structure or a rutile structure.

5. The electrode current collector (100) as claimed in any of the claims 1 to 4, wherein the metal oxide layer (120) totally covers all surfaces of the metal substrate (110).

6. The electrode current collector (100) as claimed in any of the claims 1 to 5, wherein the metal substrate (110) has a thickness of about 1 $\mu$m to about 50 $\mu$m.

7. The electrode current collector (100) as claimed in any of the claims 1 to 6,

   wherein the metal substrate (110) comprises a base film and a metal layer on one or both sides of the base film,
   wherein the metal layer comprises titanium (Ti),
   whereby preferably the base film comprises a metal and/or a polymer,
   wherein the metal of the base film comprises indium (In), copper (Cu), magnesium (Mg), titanium (Ti), iron (Fe), cobalt (Co), nickel (Ni), zinc (Zn), aluminum (Al), germanium (Ge), lithium (Li), and/or an alloy thereof, and
   the polymer of the base film comprises polyethylene terephthalate (PET), polyethylene (PE), polypropylene (PP), polybutylene terephthalate (PBT), polyimide (PI), or a combination thereof.

8. A method of manufacturing an electrode current collector (100), the method comprising:

   preparing a metal substrate (110); and
   heat-treating the metal substrate (110) to provide a metal oxide layer (120) on at least one surface of the metal substrate (110),
   wherein the metal substrate (110) comprises titanium (Ti), and
   the metal oxide layer (120) comprises crystalline titanium oxide ($TiO_2$).

9. The method as claimed in claim 8,

wherein the heat treatment is performed inside a kiln, and
the heat treatment comprises:

a purging process of injecting oxygen ($O_2$) into the kiln; and
a temperature raising process of raising a temperature inside the kiln to a heat treatment temperature; and/or wherein the heat treatment temperature is in a range of about 200 °C to about 800 °C

10. The method as claimed in claim 8 or 9, wherein the temperature raising process comprises raising the temperature inside the kiln from room temperature to the heat treatment temperature at a heating rate of about 1 °C/min to about 100 °C/min.

11. The method as claimed in any of the claims 8 to 10,

Wherein the heat treatment comprises maintaining the temperature inside the kiln at the heat treatment temperature,
Wherein the maintenance of the heat treatment temperature is performed for about 0.1 minutes to about 180 minutes.

12. A lithium battery (10) comprising:

a cathode (200); an anode (150); and
an electrolyte between the cathode (200) and the anode (150),
wherein at least one of the cathode (200) and the anode (150) comprises the electrode current collector (100) as claimed in any of the claims 1 to 6.

13. The lithium battery (10) as claimed in claim 12,
wherein the anode (150) comprises the electrode current collector (100) and/or, before charging, the anode (150) is free of an anode active material layer.

14. The lithium battery (10) as claimed in claim 12 or 13,
further comprising, after charging, a lithium electrodeposition layer on the anode (150).

15. The lithium battery (10) as claimed in any of the claims 12 to 14,
wherein the electrolyte comprises a liquid electrolyte, a solid electrolyte, a gel electrolyte, or a combination thereof.

# FIG. 1

100

110
120

# FIG. 2

10

# FIG. 3

<u>10</u>

210 }
220 } 200
300
400
150

# FIG. 4

# FIG. 5

# FIG. 6

10

4
150
4
200

7

8

5

**EP 4 546 441 A2**

## REFERENCES CITED IN THE DESCRIPTION

**Patent documents cited in the description**

- KR 1020230145276